(19) Europäisches Patentamt
European Patent Office
Office européen des brevets

(11) **EP 4 682 521 A1**

(12) **EUROPEAN PATENT APPLICATION**

(43) Date of publication:
**21.01.2026 Bulletin 2026/04**

(51) International Patent Classification (IPC):
**G01N 25/20** $^{(2006.01)}$

(21) Application number: **25168844.6**

(52) Cooperative Patent Classification (CPC):
**G01N 25/20**

(22) Date of filing: **07.04.2025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.07.2024 KR 20240093370**

(71) Applicant: **SAMSUNG SDI CO., LTD.
Yongin-si, Gyeonggi-do 17084 (KR)**

(72) Inventors:
• **LEE, Seunghyun**
**17084 Yongin-si (KR)**
• **PARK, Minhong**
**17084 Yongin-si (KR)**
• **KIM, Minhyuk**
**17084 Yongin-si (KR)**

(74) Representative: **Marks & Clerk LLP
15 Fetter Lane
London EC4A 1BW (GB)**

(54) **DEVICE AND METHOD FOR EVALUATING CONVECTIVE HEAT TRANSFER AMOUNT AT TOP OF CELL DURING THERMAL RUNAWAY**

(57) A method of evaluating a convective heat transfer amount using a device for evaluating a convective heat transfer amount, the method including providing the device for evaluating a convective heat transfer amount, the device including a first cell, a second cell, a heater, and an upper plate, performing operation (a) of igniting the first cell and calculating a conductive heat transfer rate from the first cell to the second cell, and performing operation (b) of igniting the first cell, measuring a heat propagation time, the heat propagation time being a time from ignition of the first cell to a time when the second cell reaches a limit heat quantity, and calculating the convective heat transfer amount from the first cell to the second cell based on the second heat propagation time and the conductive heat transfer rate.

FIG. 1

EP 4 682 521 A1

# EP 4 682 521 A1

**Description**

BACKGROUND

1. Field

Embodiments relate to a method of evaluating a convective heat transfer amount at the top of a cell during thermal runaway and a device for evaluating a convective heat transfer amount.

2. Description of Related Art

Due to environmental issues such as global warming, the demand for vehicles is gradually shifting from conventional internal combustion engine vehicles to electric vehicles. That is, the demand for electric vehicles is increasing, and inevitably, the demand for batteries of vehicles is also increasing. Most batteries of vehicles are lithium ion batteries, and the lithium ion batteries have the disadvantage of being vulnerable to thermal runaway. Thermal runaway is a phenomenon in which a temperature of a battery cell rapidly rises due to external impact or self-heating. The causes of thermal runaway are diverse, including short circuits or overcharging caused by external impact.

Meanwhile, in order to prevent thermal runaway from propagating between a plurality of batteries, a variety of studies are being conducted, including the design of insulator structures between cells, the design of extinguishing agents, and cooling design.

In particular, with regard to battery cooling design, a water cooling method is being introduced to efficiently cool spaces other than batteries.

The above information disclosed in this Background section is for enhancement of understanding of the background of the present disclosure, and therefore, it may contain information that does not constitute related (or prior) art.

SUMMARY

Embodiments include a method of evaluating a convective heat transfer amount using a device for evaluating a convective heat transfer amount, the method including providing the device for evaluating a convective heat transfer amount, the device including a first cell, a second cell, a heater, and an upper plate, performing operation (a) of igniting the first cell and calculating a conductive heat transfer rate from the first cell to the second cell, and performing operation (b) of igniting the first cell, measuring a heat propagation time, the heat propagation time being a time from ignition of the first cell to a time when the second cell reaches a limit heat quantity, and calculating the convective heat transfer amount from the first cell to the second cell based on the heat propagation time and the conductive heat transfer rate.

The performing operation (a) may include igniting the first cell by applying a predetermined temperature rise condition, wherein measuring the heat propagation time comprises measuring a first heat propagation time, when the second cell reaches the limit heat quantity due to conductive heat transferred from the first cell, measuring the first heat propagation time, the first heat propagation time being a time from ignition of the first cell to the time when the second cell reaches the limit heat quantity, and calculating the conductive heat transfer rate based on the limit heat quantity and the first heat propagation time.

The calculating of the conductive heat transfer rate may include calculating the conductive heat transfer rate by dividing the limit heat quantity by the first heat propagation time.

The performing operation (b) may include igniting the first cell by applying a predetermined temperature rise condition, when the second cell reaches the limit heat quantity due to conductive heat and convective heat transferred from the first cell, measuring a second heat propagation time, the second heat propagation time being the time from ignition of the first cell to the time when the second cell reaches the limit heat quantity, calculating a conductive heat transfer amount by multiplying the second heat propagation time by the conductive heat transfer rate, and calculating a convective heat transfer amount by subtracting the conductive heat transfer amount from the limit heat quantity.

Providing the device for evaluating a convective heat transfer amount may include having the heater on a side surface of the first cell in a direction opposite to the second cell based on the first cell.

Providing the device for evaluating a convective heat transfer amount may include, as part of the device for evaluating a convective heat transfer amount, providing a cell partition jig, and wherein the cell partition jig fixes the upper plate so that the upper plate is spaced a set interval from upper portions of the first cell and the second cell.

The set interval may be greater than or equal to 15 mm.

The device for evaluating a convective heat transfer amount may further include a convective heat measuring device above the first cell, and wherein the method of evaluating a convective heat transfer amount further includes measuring a heat quantity radiated into an upper space of the first cell after the first cell is ignited using the convective heat measuring device, and calculating an upper convective heat transfer ratio by dividing the convective heat transfer amount by the heat quantity radiated.

Providing the device for evaluating a convective heat transfer amount may include providing the device for evaluating a convective heat transfer amount having an insulator between the first cell and the second cell.

Providing the device for evaluating a convective heat transfer amount may include providing the upper plate above the first cell and the second cell at a predetermined distance therefrom.

Providing the device for evaluating a convective heat transfer amount may include providing the upper plate, the upper plate including an insulator.

Providing the device for evaluating a convective heat transfer amount may include providing the upper plate with a vermiculite sheet.

The performing operation (a) may include performing operation (a) after the upper plate is removed from the device for evaluating a convective heat transfer amount.

The performing operation (b) may include performing operation (b) after the upper plate is fastened to the device for evaluating a convective heat transfer amount.

The limit heat quantity may be a heat quantity that leads to ignition.

The performing operation (a) may include applying a predetermined temperature rise condition to the first cell using the heater.

The performing operation (b) may include determining an ignition time of the first cell based on a temperature profile measured by a temperature sensor attached to the first cell.

The performing operation (b) may include determining an ignition time of the first cell based on an electromotive force measured from a thermocouple connected to a positive electrode and a negative electrode of the first cell.

The performing operation (b) may include determining a time at which the second cell reaches the limit heat quantity based on a temperature profile measured by a temperature sensor attached to the second cell.

The performing operation (b) may include determining a time point at which the second cell reaches the limit heat quantity based on an electromotive force measured from a thermocouple connected to a positive electrode and a negative electrode of the second cell.

Aspects of the present disclosure are not limited to the above, and other aspects not specifically mentioned herein, and aspects of the present disclosure that would address such problems, will be clearly understood by those skilled in the art from the description of the present disclosure below.

At least some of the above and other features of the invention are set out in the claims.

BRIEF DESCRIPTION OF THE DRAWINGS

The following drawings attached to the present specification illustrate embodiments of the present disclosure, and further describe aspects of the present disclosure together with the detailed description of the present disclosure. Thus, the present disclosure should not be construed as being limited to the drawings:

FIG. 1 is a diagram for describing a path along which heat is transferred from an ignition cell to an adjacent cell during thermal runaway of a battery cell;

FIG. 2 is a diagram illustrating a configuration of a device for evaluating a convective heat transfer amount according to one or more embodiments of the present disclosure;

FIG. 3 is a diagram illustrating a state in which an upper plate is removed from the device for evaluating a convective heat transfer amount according to one or more embodiments of the present disclosure;

FIG. 4 is a diagram illustrating the upper plate being fastened to the device for evaluating a convective heat transfer amount according to one or more embodiments of the present disclosure;

FIG. 5 is a front view illustrating a cell partition jig included in the device for evaluating a convective heat transfer amount according to one or more embodiments of the present disclosure;

FIG. 6 is a plan view illustrating the upper plate included in the device for evaluating a convective heat transfer amount according to one or more embodiments of the present disclosure;

FIG. 7 is a side view illustrating the cell partition jig included in the device for evaluating a convective heat transfer amount according to one or more embodiments of the present disclosure;

FIG. 8 is a flowchart for describing a method of evaluating a convective heat transfer amount at the top of a cell during thermal runaway according to one or more embodiments of the present disclosure; and

FIG. 9 is a diagram illustrating heat propagation profiles of a case in which the upper plate is fastened and a case in which the upper plate is removed in the device for evaluating a convective heat transfer amount according to one or more embodiments of the present disclosure.

DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of one or more embodiments of the present disclosure and do not represent all of the aspects of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would have basis in the application as filed.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

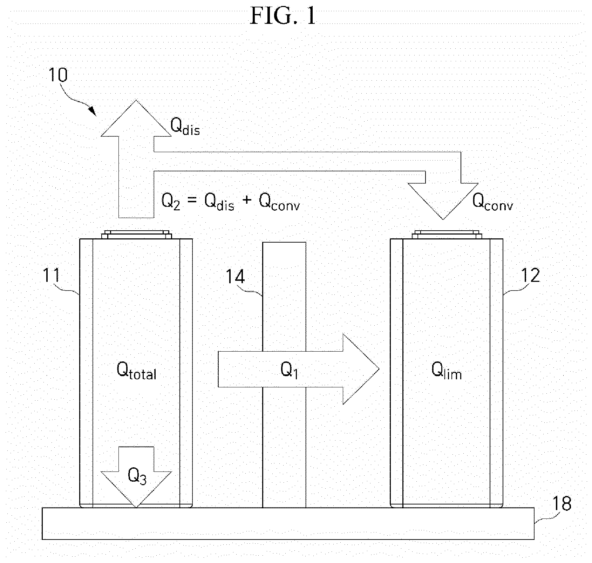

FIG. 1 is a diagram for describing a path along which heat is transferred from an ignition cell to an adjacent cell during thermal runaway of a battery cell.

The present disclosure relates to a method of evaluating a convective heat transfer amount at the top of a cell during thermal runaway of a battery cell and a device for evaluating a convective heat transfer amount for performing the method, and therefore assumes a thermal runaway situation of the cell.

FIG. 1 is a schematic diagram of a battery cell module 10 in a 2p-1s form. The battery cell module 10 may include an ignition cell 11, an adjacent cell 12, and an insulator 14. The insulator 14 may be disposed between the ignition cell 11 and the adjacent cell 12.

A total heat quantity $Q_{total}$ of the ignition cell 11 in which thermal runaway occurs is divided into $Q_1$, $Q_2$, and $Q_3$. $Q_1$ may be a heat quantity transferred from the ignition cell 11 to the adjacent cell 12 through the insulator 14 during thermal runaway, and $Q_2$ may be the total heat quantity transferred to the air or the adjacent cell 12 through an upper space during thermal runaway. $Q_2$ may be divided into $Q_{dis}$ and $Q_{conv}$. $Q_{dis}$ may be a heat quantity radiated to the air, which is not transferred to the adjacent cell 12, of the heat quantity radiated from the ignition cell 11 to the upper space, and $Q_{conv}$ may be a heat quantity, which is transferred to the adjacent cell 12 through a convective heat transfer, of the heat quantity radiated from the ignition cell 11 to the upper space. $Q_3$ (cooling heat quantity) may be a heat quantity cooled through the cooling design of a module or pack.

In addition, $Q_{lim}$ (limit heat quantity) may be a heat quantity accepted by the adjacent cell 12 before thermal runaway occurs in the adjacent cell 12 during a heat transfer. Therefore, a range of the cooling heat quantity $Q_3$, which prevents thermal runaway from occurring in the adjacent cell 12 due to the heat quantity generated in the ignition cell 11, may be derived as in Expression 1. That is, by applying Expression 1, heat transfer prevention design may be implemented to prevent thermal runaway of the adjacent cell 12 due to the ignition cell 11.

[Expression 1]

$$Q_3 > Q_1 + Q_{conv} - Q_{lim}$$

Thus, in order to reduce the existing cooling design margin and thus reduce a production cost of a battery, it is necessary to accurately evaluate $Q_1$, $Q_{conv}$, and $Q_{lim}$ of Expression 1. The present disclosure proposes a device for evaluating a convective heat transfer amount for accurately evaluating $Q_{conv}$ among $Q_1$, $Q_{conv}$, and $Q_{lim}$ and a method of evaluating a convective heat transfer amount using the same.

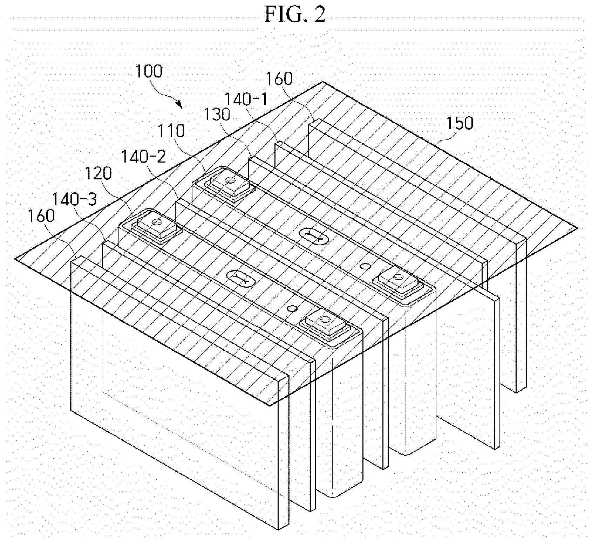

FIG. 2 is a diagram illustrating a configuration of a device for evaluating a convective heat transfer amount according to one or more embodiments of the present disclosure.

A device 100 for evaluating a convective heat transfer amount according to one embodiment of the present disclosure may be a device for accurately evaluating a convective heat transfer amount transferred to an adjacent cell through an upper space when thermal runaway occurs in a specific cell. The device 100 for evaluating a convective heat transfer amount is a device for reproducing a simplified module formed of battery cells connected in a 2p-1s form and its environment and may include a first cell 110, a second cell 120, a heater 130, an insulator 140, and an upper plate 150 and may further include a cell partition jig 160.

The device 100 for evaluating a convective heat transfer amount shown in FIG. 2 is one example, and the components of the device 100 for evaluating a convective heat transfer amount according to the present disclosure may be added, changed, or omitted as necessary. For example, the first cell 110 and the second cell 120 may be disposed in a 2s-1p form instead of a 2p-1s form.

By using the device 100 for evaluating a convective heat transfer amount, a difference of a heat propagation time of a heat quantity transferred from the first cell 110 to the second cell 120 depending on the presence or absence of the upper plate 150 above the first cell 110 and the second cell 120 may be measured, and a conductive heat transfer amount may be calculated on the basis of the difference of the heat propagation time.

Although a module of the device 100 for evaluating a convective heat transfer amount according to the embodiment of FIG. 2 is formed in a 2p-1s form, a person of ordinary skill in the art to which the present disclosure pertains may variously modify and change the embodiment of the device 100 for evaluating a convective heat transfer amount proposed in the present specification without departing from the scope of the present disclosure.

The first cell 110 may be an ignition cell designed to be heated by the heater 130 to cause thermal runaway.

The second cell 120 may be an adjacent cell of the first cell 110 and may be a cell that is heated by the heat transferred from the first cell 110 caused by thermal runaway.

The heater 130 may function to heat the first cell 110 and cause thermal runaway of the first cell 110. In the embodiment of FIG. 2, the heater 130 may be disposed on a side opposite to a direction in which the second cell 120 is disposed based on the first cell 110. For example, the first cell 110 may be between the heater 130 and the second cell 120. Since the device 100 for evaluating a convective heat transfer amount may be a device for evaluating the convective heat transfer amount generated in the first cell 110 and transferred to the second cell 120, this design may be employed to prevent heat of the heater 130 from being directly transferred to the second cell 120.

The insulator 140 may be disposed between the first cell 110 and the second cell 120 to simulate a configuration of a battery module. The insulator 140 may include a plurality of insulators 140-1, 140-2 and 140-3. As in the embodiment of the device 100 for evaluating a convective heat transfer amount shown in FIG. 2, other insulators may be disposed outside the first cell 110 or the second cell 120 in addition to the insulator 140-2 disposed between the first cell 110 and the second cell 120. For example, the insulator 140-1 may be disposed between the heater 130 and the cell partition jig 160, and another insulator 140-3 may be disposed between the second cell 120 and the cell partition jig 160.

The insulator 140-2 may be disposed between the first cell 110 and the second cell 120 to accurately measure conductive heat transferred from the first cell 110 to the second cell 120.

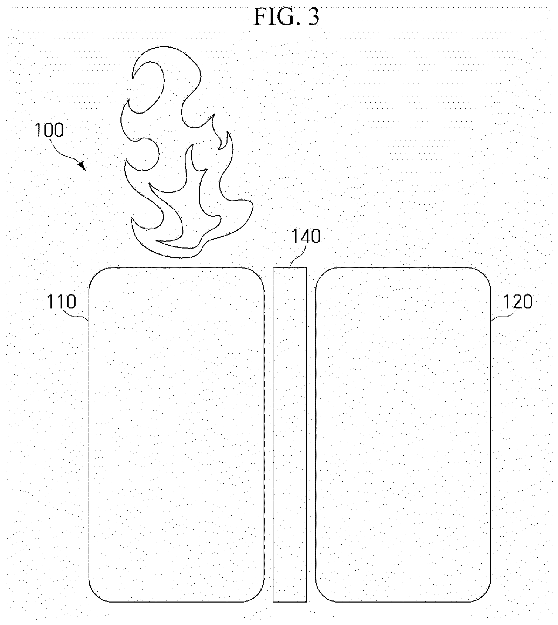

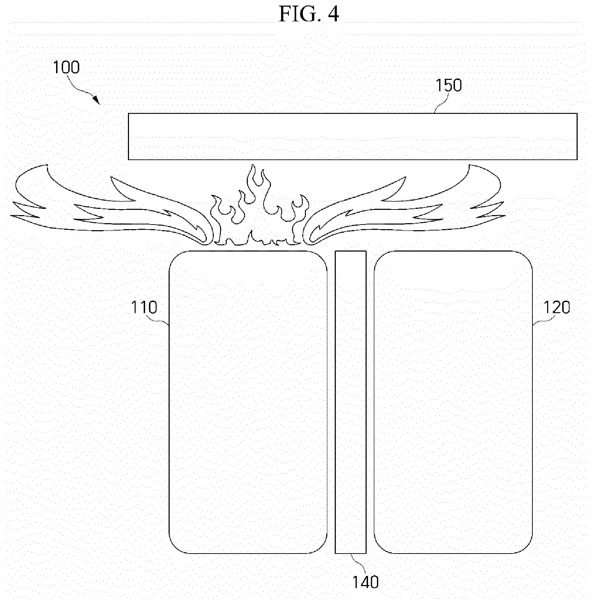

The upper plate 150 may be fastened to or removed from the device 100 for evaluating a convective heat transfer amount. This is for separately calculating conductive heat transfer amounts when the upper plate 150 is not applied (removed) and is applied (fastened) and calculating a convective heat transfer amount on the basis of the conductive heat transfer amounts. The method of evaluating a convective heat transfer amount according to the present disclosure may be a method of estimating a convective heat transfer amount on the basis of a heat propagation reduction time when the upper plate 150 is applied compared to a case in which the upper plate 150 is not present (see FIGS. 3 and 4). When the upper plate 150 is applied, the upper plate 150 may be formed of an insulator such as a vermiculite sheet from the first cell 110 to the second cell 120.

The cell partition jig 160 may function to arrange the upper plate 150 at a certain distance (a cell-to-plate gap, for example, 15 mm) from upper portions of the first cell 110 and the second cell 120. That is, the cell partition jig 160 may function to set a gap between the first cell 110 and the second cell 120 and the upper plate 150 to be constant, thereby simulating a space above the first cell 110 and the second cell 120 to be similar to an actual module environment. The cell partition jig 160 may include an insulator to prevent heat generated during thermal runaway of the first cell 110 from being transferred to the outside.

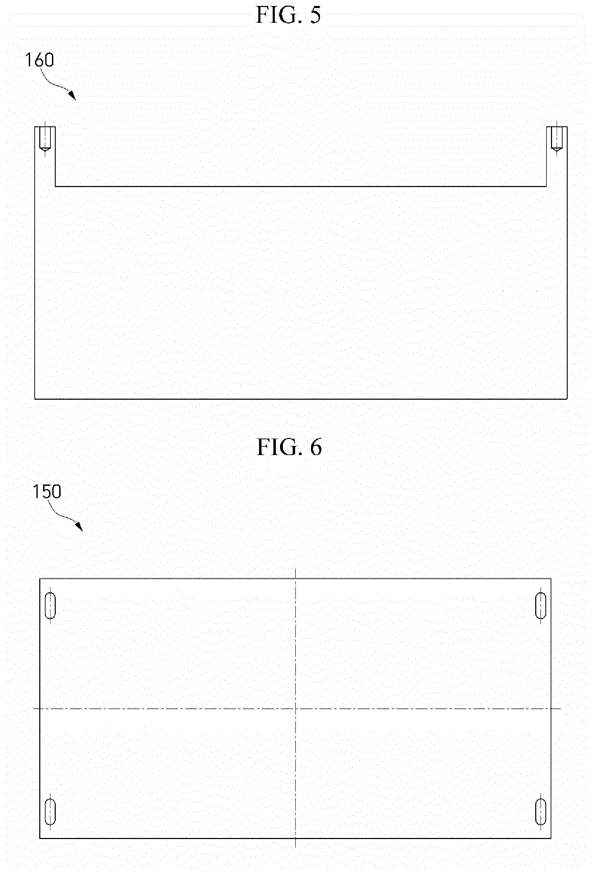

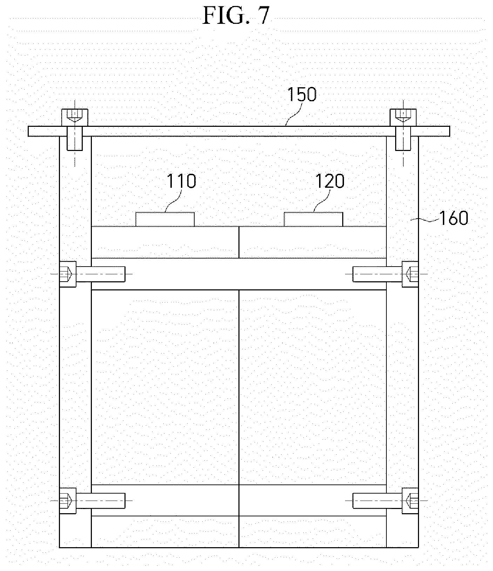

FIG. 5 is a front view illustrating a cell partition jig included in the device for evaluating a convective heat transfer amount according to one or more embodiments of the present disclosure, FIG. 6 is a plan view illustrating the upper plate included in the device for evaluating a convective heat transfer amount according to one or more embodiments of the present disclosure, and FIG. 7 is a side view illustrating the cell partition jig included in the device for evaluating a convective heat transfer amount according to one or more embodiments of the present disclosure.

As shown in FIG. 7, the upper plate 150 shown in FIG. 6 may be fastened to the cell partition jig 160 and disposed at a set distance from the first cell 110 and the second cell 120.

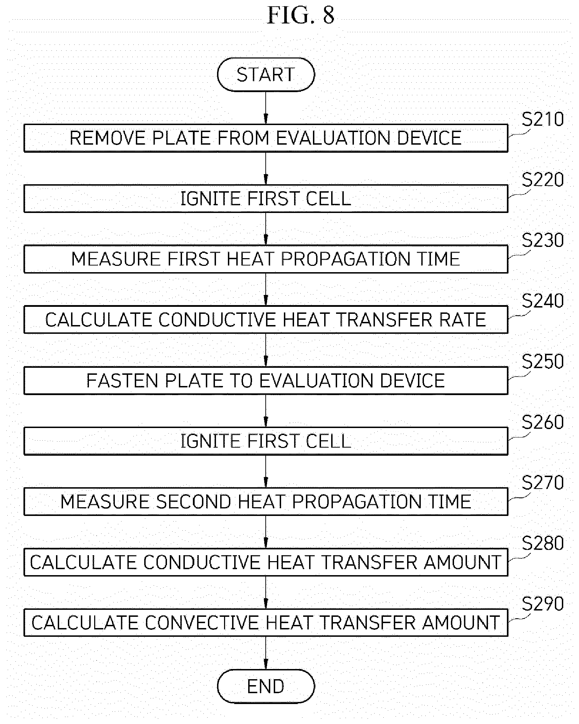

FIG. 8 is a flowchart for describing a method of evaluating a convective heat transfer amount at the top of a cell during thermal runaway according to a first embodiment of the present disclosure (which may be abbreviated as "method of evaluating a convective heat transfer amount").

Referring to FIG. 8, the method of evaluating a convective heat transfer amount according to a first embodiment of the present disclosure may include operations S210 to S290. The method of evaluating a convective heat transfer amount shown in FIG. 8 is according to the first embodiment, and operations of the method of evaluating a convective heat transfer amount according to the present disclosure may be added, changed, or omitted, as necessary.

For convenience of description, it is assumed that the method for evaluating a convective heat transfer amount according to the first embodiment of the present disclosure may be performed using the device 100 for evaluating a convective heat transfer amount of FIG. 2.

Operation S210 may be an operation of removing the upper plate 150 from the device 100 for evaluating a convective heat transfer amount.

When the upper plate 150 is removed from the device 100 for evaluating a convective heat transfer amount, heat radiated from the first cell 110 toward an upper space when the first cell 110 ignites may propagate into the air. In the present disclosure, it is assumed that, in this case, the heat released from the first cell 110 toward the upper space may not be transferred to the second cell 120, and the second cell 120 may reach a limit heat quantity $Q_{lim}$ only by conduction heat $Q_1$.

Operation S220 may be an operation of igniting the first cell 110.

After the upper plate 150 is removed, the heater 130 may heat the first cell 110 until the first cell 110 reaches a thermal runaway state. The first cell 110 is given a predetermined temperature increase condition (e.g., 20 °C/min) by the heater 130.

Operation S230 may be an operation of measuring a first heat propagation time.

In the present specification, a first heat propagation time $T_1$ may be a time from the ignition point (thermal runaway time point) of the first cell 110 to an ignition time point of the second cell 120 when the upper plate 150 is removed from the device 100 for evaluating a convective heat transfer amount. That is, when the upper plate 150 is removed from the device 100 for evaluating a convective heat transfer amount, the first heat propagation time $T_1$ may be a time from the ignition time point of the first cell 110 to a time when the second cell 120 reaches the limit heat quantity $Q_{lim}$. The ignition time points of the first cell 110 and the second cell 120 may be determined on the basis of temperature profiles measured by temperature sensors attached to the first cell 110 and the second cell 120. For example, when an instantaneous rate of change of the temperature profile or an average rate of change for a predetermined period of time exceeds a limit critical rate of change, it may be determined that a corresponding cell reaches the ignition time point (or a limit heat quantity). As another example, the ignition time point may be determined by connecting a thermocouple to positive electrodes and negative electrodes of the first cell 110 and the second cell 120 and measuring an electromotive force using a voltmeter (a voltage drops to zero in the case of thermal runaway).

Operation S240 may be an operation of calculating a conductive heat transfer rate.

As described above, according to the present disclosure, it may be assumed that, when the upper plate 150 is removed from the device 100 for evaluating a convective heat transfer amount, the second cell 120 reaches the limit heat quantity $Q_{lim}$ by conductive heat $Q_1$ only. Therefore, a conductive heat transfer rate $K_c$ from the ignition cell 11 to the adjacent cell 12 through the insulator 14 may be a value obtained by dividing the limit heat quantity $Q_{lim}$ of the second cell 120 by the first heat propagation time $T_1$.

Operation S250 may be an operation of fastening the upper plate 150 to the device 100 for evaluating a convective heat transfer amount.

When the upper plate 150 is fastened to the device 100 for evaluating a convective heat transfer amount, some of the heat $Q_{conv}$ released from the first cell 110 toward the upper space when the first cell 110 ignites may be transferred to the second cell 120 through convection, and the remaining heat $Q_{dis}$ may propagate into the air. Therefore, the second cell 120 may reach the limit heat quantity $Q_{lim}$ through the convective heat $Q_{conv}$ transferred to the second cell 120 through the upper space of the first cell 110 and conductive heat $Q_1$ transferred to the second cell 120 from the first cell 110 through the insulator 140.

Operation S260 may be an operation of igniting the first cell 110.

After the upper plate 150 is fastened, the heater 130 may heat the first cell 110 until the first cell 110 reaches a thermal runaway state. The first cell 110 is given a predetermined temperature increase condition (e.g., 20 °C/min) by the heater 130.

Operation S270 may be an operation of measuring a second heat propagation time.

In the present specification, a second heat propagation time $T_2$ may be a time from the ignition point (thermal runaway time point) of the first cell 110 to an ignition time point of the second cell 120 when the upper plate 150 is fastened to the device 100 for evaluating a convective heat transfer amount. That is, when the upper plate 150 is fastened to the device 100 for evaluating a convective heat transfer amount, the second heat propagation time $T_2$ may be a time from the ignition time point of the first cell 110 to a time when the second cell 120 reaches the limit heat quantity $Q_{lim}$.

Similar to operation S270, the ignition time points of the first cell 110 and the second cell 120 may be determined on the basis of temperature profiles measured by temperature sensors attached to the first cell 110 and the second cell 120.

Operation S280 may be an operation of calculating a conductive heat transfer amount when the upper plate 150 is applied.

Since the device 100 for evaluating a convective heat transfer amount uses the same insulator 140 when the upper plate 150 is omitted or fastened, the conductive heat transfer rate $K_c$ from the first cell 110 to the second cell 120 may be the same during thermal runaway of the first cell 110 regardless of whether the upper plate 150 is fastened. Therefore, when the upper plate 150 is applied, the conductive heat transfer amount $Q_1$ may be calculated by multiplying the conductive heat transfer rate $K_c$ calculated in operation S240 by the second heat propagation time $T_2$ measured in operation S270.

Operation S290 may be an operation of calculating the convective heat transfer amount.

As described above, when the upper plate 150 is fastened to the device 100 for evaluating a convective heat transfer amount, the second cell 120 may reach the limit heat quantity $Q_{lim}$ through the convective heat $Q_{conv}$ transferred to the second cell 120 through the upper space of the first cell 110 and the conductive heat $Q_1$ transferred to the second cell 120 through the insulator 140. Thus, the convective heat transfer amount $Q_{conv}$ may be calculated by subtracting the conductive heat transfer amount $Q_1$ when the upper plate 150 is applied from the limit heat quantity $Q_{lim}$ of the second cell 120.

Additionally, the device 100 for evaluating a convective heat transfer amount may measure the heat quantity $Q_2$ radiated into the upper space during thermal runaway of the first cell 110 by additionally arranging a separate convective heat measuring device above the first cell 110. For example, the convective heat measuring device may measure $Q_2$ by measuring a temperature rise of air that absorbs heat energy radiated from an upper portion of the first cell 110. If the heat quantity $Q_2$ radiated from the upper space in the first cell 110 is measurable, an upper convective heat transfer ratio $Q_{conv}/Q_2$ may be obtained by dividing the convective heat transfer amount $Q_{conv}$ by $Q_2$.

For each of battery model samples Sa, Sb, and Sc, a convective heat transfer amount $Q_{conv}$ and an upper convective heat transfer ratio $Q_{conv}/Q_2$ were measured by applying the method of evaluating a convective heat transfer amount according to the present disclosure, and the results are summarized in the following table 1. The test results were obtained by setting a distance (cell-to-plate) from the first cell 110 and second cell 120 to the upper plate 150 to 15 mm and setting a temperature rise condition to 20 degrees per minute using the device 100 for evaluating a convective heat transfer amount. A thickness of the insulator 140 of 10 mm was applied.

[Table 1]

| Classification (unit) | Calculation equation | Sa | Sb | Sc |
|---|---|---|---|---|
| $T_1$ (min) | | 30 | 35 | 28 |
| $T_2$ (min) | | 22 | 19 | 10 |
| $Q_{lim}$ (kJ) | | 104 | 170 | 198 |
| $K_c$ (kJ/min) | $K_c = Q_{lim} / T_1$ | 3.47 | 4.86 | 7.07 |
| $Q_{12}$ (kJ) | $Q_{12} = K_c * T_2$ | 76.3 | 92.3 | 70.7 |
| $Q_{conv}$ (kJ) | $Q_{conv} = Q_{lim} - Q_{12}$ | 27.7 | 77.7 | 127.3 |
| $Q_2$ (kJ) | | 358 | 780 | 1014 |
| $Q_{conv}/Q_2$ | | 7.75% | 9.96% | 12.55% |

There may be differences in size and capacity of a cell and other test environments for each sample in Table 1, which may cause differences in convective heat transfer amount $Q_{conv}$ and upper convective heat transfer ratio $Q_{conv}/Q_2$.

The above method of evaluating a convective heat transfer amount was described with reference to the flowchart presented in FIG. 8. For simplicity of description, although the method has been illustrated and described as a series (order) of blocks, some blocks may occur in a different order or concurrently with other blocks than is illustrated and described in the present specification, and various other branches, flow paths, and orders of blocks may be implemented that achieve the same or similar results. In addition, all illustrated blocks may not be required for implementing the method described herein.

Meanwhile, in the description referring to FIG. 8, the operations may be further divided into additional operations or combined into fewer operations depending on the implementation example of the present disclosure. In addition, some operations may be omitted, when necessary, and the order between operations may be changed. In addition, although other content is omitted, the content of FIGS. 1 to 7 may also be applied to the content of FIG. 8. In addition, the content of FIG. 8 may be applied to the content of FIGS. 1 to 7.

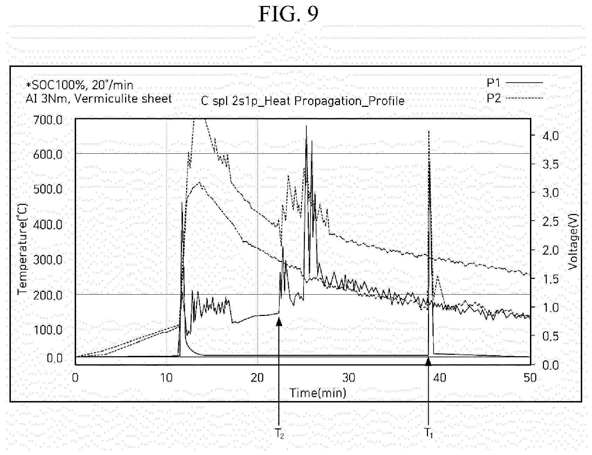

FIG. 9 is a diagram illustrating heat propagation profiles of a case in which the upper plate is fastened and a case in which the upper plate is removed in the device for evaluating a convective heat transfer amount according to one embodiment of the present disclosure.

In FIG. 9, P1 may be a temperature profile measured from a temperature sensor attached to the second cell 120, and P2 may be a temperature profile measured from a temperature sensor attached to the first cell 110. For example, the temperature sensors may be thermocouples and may be attached to short sides of a positive electrode or a negative electrode of the cell. In P1, temperature profiles may be different when the upper plate 150 is applied and is not applied. On the premise that thermal runaway of the first cell 110 occurs, $T_1$ may be a time (first heat propagation time) until the second cell 120 reaches $Q_{lim}$ (limit heat quantity) when the upper plate 150 is removed, and $T_2$ may be a time (second heat propagation time) until the second cell 120 reaches $Q_{lim}$ (limit heat quantity) when the upper plate 150 is fastened (installed). That is, when the upper plate 150 is fastened, it can be seen that the heat propagation time is shortened compared to when the upper plate 150 is removed.

Although the present disclosure has been described above with respect to some embodiments thereof, the present disclosure is not limited thereto. Various suitable modifications and variations can be made thereto by those skilled in the art within the scope of the present disclosure, the scope of which is defined by the following claims and the equivalents thereof.

For example, the temperature sensors attached to the first cell 110 and the second cell 120 may be sensors capable of performing wireless communication, and in this case, an evaluation system, which is an external computing device, may collect temperature profile information of the first cell 110 and the second cell 120 through wireless communication with the temperature sensors attached to the cells, automatically determine a heat propagation time, and calculate the conductive heat transfer rate $K_c$, the conductive heat transfer amount $Q_1$, and the convective heat transfer amount $Q_{conv}$ on the basis of the heat propagation time. That is, the device 100 for evaluating a convective heat transfer amount may be connected to an external computing device (evaluation system) in a wireless manner to form a convective heat transfer amount evaluation system that evaluates the convective heat transfer amount at the top of the battery cell during thermal runaway of the battery cell.

Recently, vehicle manufacturers have been demanding high outputs and short charging times for vehicle batteries. For these demands, water cooling is emerging as a good alternative. However, in order to reduce production costs of batteries, the margin of cooling design should be minimized, and therefore, a method of accurately evaluating a heat quantity of an ignited cell is needed.

According to the embodiments of the present disclosure, a convective heat transfer amount at the top of a battery cell during thermal runaway can be quantified and evaluated, thereby reducing the existing cooling design margin so that there is an effect of reducing a production cost of a battery.

The present disclosure is directed to providing a method of evaluating a convective heat transfer amount at the top of a cell during thermal runaway, which can measure a heat propagation time from a battery cell in which thermal runaway occurs to an adjacent battery cell using a device for evaluating a convective heat transfer amount, calculate a conductive heat transfer amount between the two battery cells on the basis of the heat propagation time, and calculate a convective heat transfer amount at the top of a battery cell on the basis of the calculated conductive heat transfer amount.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

Embodiments are set out in the following clauses:

Clause 1. A method of evaluating a convective heat transfer amount using a device for evaluating a convective heat transfer amount, which comprises a first cell, a second cell, a heater, and an upper plate, the method comprising:

operation (a) of igniting the first cell and calculating a conductive heat transfer rate from the first cell to the second cell; and
operation (b) of igniting the first cell, measuring a second heat propagation time that is a time from an ignition time point of the first cell to a time when the second cell reaches a limit heat quantity, and calculating the convective heat transfer amount from the first cell to the second cell on the basis of the second heat propagation time and the conductive heat transfer rate.

Clause 2. The method as claimed in clause 1, wherein the operation (a) comprises:

igniting the first cell by applying a predetermined temperature rise condition;
when the second cell reaches the limit heat quantity due to conductive heat transferred from the first cell, measuring a first heat propagation time that is the time from the ignition time point of the first cell to the time when the second cell reaches the limit heat quantity; and
calculating a conductive heat transfer rate on the basis of the limit heat quantity and the first heat propagation time.

Clause 3. The method of clause 1 or clause 2, wherein the operation (b) comprises:

igniting the first cell by applying a predetermined temperature rise condition;
when the second cell reaches the limit heat quantity due to conductive heat and convective heat transferred from the first cell, measuring a second heat propagation time that is the time from the ignition time point of the first cell to the time when the second cell reaches the limit heat quantity;
calculating a conductive heat transfer amount by multiplying the second heat propagation time by the conductive heat transfer rate; and
calculating a convective heat transfer amount by subtracting the conductive heat transfer amount from the limit heat quantity.

Clause 4. The method of any preceding clause, wherein the heater is disposed on a side surface of the first cell and disposed in a direction opposite to the second cell based on the first cell.

Clause 5. The method of any preceding clause, wherein the device for evaluating a convective heat transfer amount further comprises:
a cell partition jig; and
the cell partition jig fixes the upper plate so that the upper plate is spaced a set interval from upper portions of the first cell and the second cell.

Clause 6. The method of any preceding clause, wherein:
the device for evaluating a convective heat transfer amount further comprises a convective heat measuring device disposed above the first cell; and
the method of evaluating a convective heat transfer amount further comprises measuring a heat quantity radiated into an upper space of the first cell after the first cell is ignited using the convective heat measuring device, and calculating an upper convective heat transfer ratio by dividing the convective heat transfer amount by the radiated heat quantity.

Clause 7. The method of any preceding clause, wherein the device for evaluating a convective heat transfer amount further comprises an insulator disposed between the first cell and the second cell.

Clause 8. The method of any preceding clause, wherein the upper plate is disposed above the first cell and the second cell at a predetermined distance therefrom.

Clause 9. The method of any preceding clause, wherein the upper plate comprises an insulator.

Clause 10. The method of any preceding clause, wherein the upper plate is formed of a vermiculite sheet.

Clause 11. The method of any preceding clause, wherein the operation (a) is performed in a state in which the upper plate is removed from the device for evaluating a convective heat transfer amount.

Clause 12. The method of any preceding clause, wherein the operation (b) is performed in a state in which the upper plate is fastened to the device for evaluating a convective heat transfer amount.

Clause 13. The method of any preceding clause, wherein the limit heat quantity is a heat quantity that leads to ignition.

Clause 14. The method of any preceding clause, wherein the operation (a) comprises applying a predetermined temperature rise condition to the first cell using the heater.

Clause 15. The method of any preceding clause, wherein the operation (b) comprises determining the ignition time point of the first cell on the basis of a temperature profile measured by a temperature sensor attached to the first cell.

Clause 16. The method of any preceding clause, wherein the operation (b) comprises determining the ignition time point of the first cell on the basis of an electromotive force measured from a thermocouple connected to a positive electrode and a negative electrode of the first cell.

Clause 17. The method of any preceding clause, wherein the operation (b) comprises determining a time point at which the second cell reaches the limit heat quantity on the basis of a temperature profile measured by a temperature sensor attached to the second cell.

Clause 18. The method of any preceding clause, wherein the operation (b) comprises determining a time point at which the second cell reaches the limit heat quantity on the basis of an electromotive force measured from a thermocouple connected to a positive electrode and a negative electrode of the second cell.

Clause 19. The method of any of clauses 2 to 18, wherein the calculating of the conductive heat transfer rate comprises calculating the conductive heat transfer rate by dividing the limit heat quantity by the first heat propagation time.

Clause 20. The method of any of clauses 5 to 19, wherein the set interval is greater than or equal to 15 mm.

**Claims**

1. A method of evaluating a convective heat transfer amount using a device for evaluating a convective heat transfer amount, the method comprising:

   providing the device for evaluating a convective heat transfer amount, the device including a first cell, a second cell, a heater, and an upper plate;
   performing operation (a) of igniting the first cell and calculating a conductive heat transfer rate from the first cell to the second cell; and
   performing operation (b) of igniting the first cell, measuring a heat propagation time, the heat propagation time being a time from ignition of the first cell to a time when the second cell reaches a limit heat quantity, and calculating the convective heat transfer amount from the first cell to the second cell based on the heat propagation time and the conductive heat transfer rate.

2. The method as claimed in claim 1, wherein the performing operation (a) comprises:

   igniting the first cell by applying a predetermined temperature rise condition, wherein measuring the heat propagation time comprises measuring a first heat propagation time;
   when the second cell reaches the limit heat quantity due to conductive heat transferred from the first cell, measuring the first heat propagation time, the first heat propagation time being a time from ignition of the first cell to the time when the second cell reaches the limit heat quantity; and
   calculating the conductive heat transfer rate based on the limit heat quantity and the first heat propagation time.

3. The method as claimed in claim 2, wherein the calculating of the conductive heat transfer rate comprises calculating the conductive heat transfer rate by dividing the limit heat quantity by the first heat propagation time.

4. The method as claimed in any preceding claim, wherein the performing operation (b) comprises:

   igniting the first cell by applying a predetermined temperature rise condition;
   when the second cell reaches the limit heat quantity due to conductive heat and convective heat transferred from the first cell, measuring a second heat propagation time, the second heat propagation time being the time from ignition of the first cell to the time when the second cell reaches the limit heat quantity;
   calculating a conductive heat transfer amount by multiplying the second heat propagation time by the conductive heat transfer rate; and
   calculating a convective heat transfer amount by subtracting the conductive heat transfer amount from the limit heat quantity.

5. The method as claimed in any preceding claim, wherein providing the device for evaluating a convective heat transfer amount includes having the heater on a side surface of the first cell in a direction opposite to the second cell based on the first cell.

6. The method as claimed in any preceding claim, wherein providing the device for evaluating a convective heat transfer amount comprises, as part of the device for evaluating a convective heat transfer amount, providing:

   a cell partition jig; and
   wherein the cell partition jig fixes the upper plate so that the upper plate is spaced a set interval from upper portions of the first cell and the second cell.

7. The method as claimed in claim 6, wherein the set interval is greater than or equal to 15 mm.

8. The method as claimed in any preceding claim, wherein the device for evaluating a convective heat transfer amount further comprises a convective heat measuring device above the first cell, and wherein the method of evaluating a convective heat transfer amount further comprises:

measuring a heat quantity radiated into an upper space of the first cell after the first cell is ignited using the convective heat measuring device; and
calculating an upper convective heat transfer ratio by dividing the convective heat transfer amount by the heat quantity radiated.

9. The method as claimed in any preceding claim, wherein providing the device for evaluating a convective heat transfer amount includes providing the device for evaluating a convective heat transfer amount having an insulator between the first cell and the second cell.

10. The method as claimed in any preceding claim, wherein providing the device for evaluating a convective heat transfer amount includes providing the upper plate above the first cell and the second cell at a predetermined distance therefrom.

11. The method as claimed in any preceding claim, wherein providing the device for evaluating a convective heat transfer amount includes providing the upper plate, the upper plate including an insulator.

12. The method as claimed in any preceding claim, wherein providing the device for evaluating a convective heat transfer amount includes providing the upper plate with a vermiculite sheet.

13. The method as claimed in any preceding claim, wherein the performing operation (a) comprises performing operation (a) after the upper plate is removed from the device for evaluating a convective heat transfer amount.

14. The method as claimed in any preceding claim, wherein the performing operation (b) comprises performing operation (b) after the upper plate is fastened to the device for evaluating a convective heat transfer amount.

15. The method as claimed in any preceding claim, wherein the limit heat quantity is a heat quantity that leads to ignition.

FIG. 1

## FIG. 2

FIG. 3

FIG. 4

FIG. 5

FIG. 6

## FIG. 7

## FIG. 8

```
                    ( START )
                        │
                        ▼
┌──────────────────────────────────────────────┐  S210
│      REMOVE PLATE FROM EVALUATION DEVICE       │
└──────────────────────────────────────────────┘
                        │
                        ▼
┌──────────────────────────────────────────────┐  S220
│                 IGNITE FIRST CELL              │
└──────────────────────────────────────────────┘
                        │
                        ▼
┌──────────────────────────────────────────────┐  S230
│         MEASURE FIRST HEAT PROPAGATION TIME    │
└──────────────────────────────────────────────┘
                        │
                        ▼
┌──────────────────────────────────────────────┐  S240
│        CALCULATE CONDUCTIVE HEAT TRANSFER RATE │
└──────────────────────────────────────────────┘
                        │
                        ▼
┌──────────────────────────────────────────────┐  S250
│         FASTEN PLATE TO EVALUATION DEVICE      │
└──────────────────────────────────────────────┘
                        │
                        ▼
┌──────────────────────────────────────────────┐  S260
│                 IGNITE FIRST CELL              │
└──────────────────────────────────────────────┘
                        │
                        ▼
┌──────────────────────────────────────────────┐  S270
│       MEASURE SECOND HEAT PROPAGATION TIME     │
└──────────────────────────────────────────────┘
                        │
                        ▼
┌──────────────────────────────────────────────┐  S280
│     CALCULATE CONDUCTIVE HEAT TRANSFER AMOUNT  │
└──────────────────────────────────────────────┘
                        │
                        ▼
┌──────────────────────────────────────────────┐  S290
│     CALCULATE CONVECTIVE HEAT TRANSFER AMOUNT  │
└──────────────────────────────────────────────┘
                        │
                        ▼
                     ( END )
```

# FIG. 9

Europäisches
Patentamt

European
Patent Office

Office européen
des brevets

# EUROPEAN SEARCH REPORT

**Application Number**

EP 25 16 8844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 111 044 930 B (UNIV TSINGHUA) 23 October 2020 (2020-10-23) * the whole document * | 1-15 | INV. G01N25/20 |
| A | CN 113 297 738 A (STATE GRID JIANGSU ELECTRIC POWER DESIGN CONSULTING CO LTD ET AL.) 24 August 2021 (2021-08-24) * paragraph [0004] - paragraph [0011] * | 1-15 | |
| A | CN 117 233 206 A (ZHUZHOU GUOCHUANG TRACK TECH CO LTD) 15 December 2023 (2023-12-15) * paragraph [0005] - paragraph [0007] * * paragraph [0040] - paragraph [0049] * | 1-15 | |
| A | CN 115 632 181 A (SHANGHAI MAKESENS ENERGY STORAGE TECH CO LTD) 20 January 2023 (2023-01-20) * paragraph [0093] * | 1-15 | |
| A | CN 113 094 921 B (SAIC VOLKSWAGEN AUTOMOTIVE CO LTD) 25 November 2022 (2022-11-25) * paragraph [0107] - paragraph [0116] * * figure 2 * | 1-15 | **TECHNICAL FIELDS SEARCHED (IPC)** G01N |
| A | DAVID ROSEWATER: "Contents lists available at ScienceDirect", IEEE DRAFT WGDS; 855147810773, IEEE-SA IMEET CENTRAL, PISCATAWAY, NJ USA , vol. 1635 15 July 2020 (2020-07-15), pages 1-10, XP068254442, Retrieved from the Internet: URL:https://ieee-sa.imeetcentral.com/p/aQA AAAAEQQme [retrieved on 2023-08-01] * page 7, right-hand column, paragraph 2 - paragraph 3 * | 1-15 | |

The present search report has been drawn up for all claims

| Place of search | Date of completion of the search | Examiner |
|---|---|---|
| The Hague | 29 August 2025 | Baranski, Jörg |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 8844

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2025

| Patent document cited in search report | | Publication date | Patent family member(s) | Publication date |
|---|---|---|---|---|
| CN 111044930 | B | 23-10-2020 | NONE | |
| CN 113297738 | A | 24-08-2021 | NONE | |
| CN 117233206 | A | 15-12-2023 | NONE | |
| CN 115632181 | A | 20-01-2023 | NONE | |
| CN 113094921 | B | 25-11-2022 | NONE | |

EPO FORM P0459

For more details about this annex : see Official Journal of the European Patent Office, No. 12/82